# EUROPÄISCHE PATENTANMELDUNG

(11) **EP 3 680 484 A1**
(43) Veröffentlichungstag der Anmeldung: **15.07.2020**
(21) Anmeldenummer: 19150667.4
(22) Anmeldetag: 08.01.2019
(51) Int. Cl.: F04B 39/10, F16K 15/06, F16K 47/02

(54) **SITZVENTIL**

(71) Anmelder: Burckhardt Compression AG, 8404 Winterthur (CH)
(72) Erfinder: SCHULZ, Reiner, 79807 Lottstetten (DE)
(74) Vertreter: Dr. Graf & Partner AG

(57) **Zusammenfassung**

Sitzventil (10), mit einem Ventilkörper (92) aufweisend eine Mehrzahl von Einlasskanälen (94), mit einer Mehrzahl von in einer Längsrichtung (L) beweglich angeordneten Schliesselementen (14), wobei jedem Einlasskanal (94) ein Schliesselement (14) zum Öffnen und Schliessen des Einlasskanals (94) zugeordnet ist, mit einer jedem Schliesselement (14) zugeordneten Schliessfeder (15), die das jeweilige Schliesselement (14) mit einer zum Schliessen des Einlasskanals (94) orientierten Vorspannkraft beaufschlagt, wobei jedem Schliesselement (14) eine Bremseinrichtung (16) zugeordnet ist, die getrennt von dem Schliesselement (14) angeordnet ist und die eine Öffnungsbewegung des jeweiligen Schliesselements (14) beim Öffnen des Einlasskanals (94) unabhängig von der Schliessfeder (15) allmählich abbremst.

## Beschreibung

Die vorliegende Erfindung betrifft ein Sitzventil sowie eine Schliesseinrichtung für ein Sitzventil. Die Erfindung betrifft ebenso einen Kolbenkompressor, der mit einem solchen Sitzventil oder mit einer solchen Schliesseinrichtung ausgestattet ist.

### Stand der Technik

Die Druckschrift US 4,489,752 offenbart ein Sitzventil, auch als Poppetventil bezeichnet, das für einen Kompressor verwendet wird. Bei einem solchen Poppetventil wird das jeweilige Schliesselement aufgrund des anliegenden Drucks des zu fördernden Fluids zwischen einer Öffnungs- und einer Schliessstellung hin und her bewegt. Bei Öffnungsbewegungen des Schliesselements besteht dabei die Gefahr, dass dieses auf einer von dem jeweiligen Ventilsitz abgewandten Seite an einer den Öffnungsweg begrenzenden Fläche anschlägt. Hierdurch können unerwünschte Verschleisserscheinungen beziehungsweise Beschädigungen auftreten, die einen sicheren Betrieb des Ventils beeinträchtigen.

### Darstellung der Erfindung

Vor diesem Hintergrund hat der vorliegenden Erfindung die Aufgabe zugrunde gelegen, ein Sitzventil anzugeben, das mit einem höheren Mass an Betriebssicherheit beziehungsweise verbesserter Langlebigkeit betrieben werden kann. Ebenso bestand die Aufgabe darin, eine Schliesseinrichtung sowie einen Kolbenkompressor anzugeben.

In Bezug auf das Sitzventil ist diese Aufgabe durch den Gegenstand des Anspruchs 1 gelöst worden. Eine erfindungsgemässe Schliesseinrichtung ist im Anspruch 16 angegeben. Vorteilhafte Ausgestaltungen sind in den abhängigen Ansprüchen angegeben und werden nachfolgend erörtert.

Ein erfindungsgemässes Sitzventil ist insbesondere für den Einsatz in einem Kolbenkompressor ausgebildet. Bei einem erfindungsgemässen Sitzventil handelt es sich in bevorzugter Weise um ein sogenanntes Poppetventil.

Ein erfindungsgemässes Sitzventil umfasst einen Ventilkörper aufweisend eine Mehrzahl von Einlasskanälen, und umfasst eine Mehrzahl von in einer Längsrichtung beweglich angeordneten Schliesselementen, wobei jedem Einlasskanal ein Schliesselement zum Öffnen und Schliessen des Einlasskanals zugeordnet ist, mit einer jedem Schliesselement zugeordneten Schliessfeder, die das jeweilige Schliesselement mit einer zum Schliessen des Einlasskanals orientierten Vorspannkraft beaufschlagt, wobei jedem Schliesselement eine Bremseinrichtung zugeordnet ist, die getrennt von dem Schliesselement angeordnet ist und die eine Öffnungsbewegung des jeweiligen Schliesselements beim Öffnen des Einlasskanals unabhängig von der Schliessfeder allmählich abbremst.

Das Schliesselement kann demzufolge durch die Schliessfeder in Richtung einer den Einlasskanal schliessenden Schliessstellung vorgespannt sein, so dass sich beim Öffnen des Einlasskanals aufgrund einer Öffnungsbewegung des Schliesselements die Vorspannkraft der Schliessfeder erhöht. Nach dem Öffnungsvorgang kann somit wieder ein selbsttätiges Schliessen des Schliesselements und somit des Einlasskanals erfolgen.

Unabhängig von der beim Öffnen des Einlasskanals erfolgenden Erhöhung der Vorspannkraft der Schliessfeder in Richtung einer Schliessstellung wird beim Öffnen des Einlasskanals durch die Bremseinrichtung ein allmähliches Abbremsen des Schliesselements ermöglicht. Das Abbremsen des Schliesselements durch die Bremseinrichtung erfolgt dabei erfindungsgemäss allmählich, insbesondere frei von abrupten Bewegungsbegrenzungen des Schliesselements. Aus einem Bewegungszustand wird das Schliesselement durch die Bremseinrichtung also langsam beziehungsweise vorzugsweise kontinuierlich abgebremst, wodurch Schäden oder übermässiger Verschleiss am Schliesselement beziehungsweise an Anschlagskomponenten für das Schliesselement vermieden werden können.

Die Bremseinrichtung ist erfindungsgemäss getrennt beziehungsweise unabhängig von dem Schliesselement angeordnet. Das Schliesselement kann somit ohne unmittelbare Verbindung mit der Bremseinrichtung angeordnet sein, so dass die Masse des Schliesselements geringgehalten werden kann und damit grundsätzlich ein günstiges Ansprechverhalten des Sitzventils gewährleistet ist. Insbesondere kann das Schliesselement aufgrund der von der Bremseinrichtung getrennten Anordnung auch unabhängig von der Bremsenrichtung bewegt werden, jedenfalls entlang eines bestimmten Bewegungsspielraumes.

Bei einem erfindungsgemässen Sitzventil kann in vorteilhafter Weise der Ventilkörper mit einem Ventilsitz ausgebildet sein und der Einlasskanal kann in den Ventilsitz münden. Dabei kann das Schliesselement zum Schliessen des Einlasskanals an dem Ventilsitz zur Anlage kommen und den Ventilsitz dichtend verschliessen. Zum Öffnen des Einlasskanals kann sich das Schliesselement in einer von dem Ventilsitz abgewandten Richtung bewegen und somit vom Ventilsitz abheben.

Das Schliesselement kann zum Öffnen und Schliessen des Einlasskanals in einer axialen Richtung bewegbar angeordnet sein. Bei der axialen Richtung handelt es sich in bevorzugter Weise um eine Längsachse des Einlasskanals und/oder um eine Längsachse des Schliesselements und/oder um eine Längsachse der Bremseinrichtung.

Ein Sitzventil umfasst eine Mehrzahl von Einlasskanälen und eine Mehrzahl von Schliesselementen, wobei jeweils ein Schliesselement einem Einlasskanal zugeordnet sein kann. Ein einzelnes Sitzventil kann dementsprechend mit einer Mehrzahl von Schliessventilen ausgestattet sein, wobei jedes Schliessventil durch wenigstens einen Einlasskanal und einem dem Einlasskanal zugeordneten Schliesselement gebildet ist.

Gemäss einer bevorzugten Ausgestaltung weist die Bremseinrichtung einen Bewegungsdämpfer und/oder eine Auffangfeder auf. Durch einen Bewegungsdämpfer beziehungsweise eine Auffangfeder kann in besonders vorteilhafter Weise und mit verringertem Risiko von Materialverschleiss eine allmähliche Abbremsung des Schliesselements bewerkstelligt werden. Dabei kann durch Anordnung eines Bewegungsdämpfers die Bewegungsenergie der Schliesseinrichtung in vorteilhafter Weise absorbiert werden und bei Anordnung einer Auffangfeder kann durch Abbremsen des Schliesselements die jeweilige Auffangfeder geladen und durch Entspannung wieder entladen werden. Dabei kann die Entspannung eine etwaige Rückbewegung des Schliesselements in eine den Einlasskanal schliessende Schliessstellung begünstigen.

Die Bremseinrichtung kann in bevorzugter Weise als Federanschlag und/oder Federpuffer und/oder Anschlagpuffer ausgebildet sein. Derartige Ausgestaltungen sind kostengünstig und gewährleisten ein hohes Mass an Betriebssicherheit.

Die Bremseinrichtung kann dämpfende als auch federnde Eigenschaften aufweisen, wobei hierzu gesonderte Komponenten vorgesehen sein können. Ebenso ist es möglich, dass die Dämpf- und/oder Federfunktionen durch eine einzelne Komponente bereitgestellt wird/werden, beispielsweise durch eine Komponente aus Gummimaterial, die bei Verformung sowohl federelastische als auch dämpfende Eigenschaften aufweist.

Gemäss einer weiter vorteilhaften Ausgestaltung der vorliegenden Erfindung ist das Schliesselement ausgehend von einer den Einlasskanal schliessenden Stellung in einer Öffnungsrichtung entlang einer Mindeststrecke frei von Bremswirkungen der Bremseinrichtung. Ferner kann das Schliesselement ausgehend von einer den Einlasskanal schliessenden Stellung in einer Öffnungsrichtung entlang einer Mindeststrecke relativ zur Bremseinrichtung bewegbar sein. Das Schliesselement kann daher mit nur geringem Kraftaufwand aus einer Schliessstellung in eine Öffnungsstellung bewegt werden, bevor die Bremswirkung der Bremseinrichtung einsetzt und zur allmählichen Abbremsung des Schliesselements beiträgt. Es kann somit bereits bei geringen Gasdrücken eine selbsttätige Öffnung des Schliesselements erfolgen, ohne jedoch, dass die Gefahr von übermässigem Materialverschleiss aufgrund von abrupten Anschlägen oder Abbremsvorgängen an feststehenden Anschlägen entsteht.

Dementsprechend kann die Bremseinrichtung dazu eingerichtet sein, das Schliesselement erst nach einer zurückgelegten Mindeststrecke ausgehend von einer den Einlasskanal schliessenden Stellung allmählich abzubremsen. Dabei kann die Mindeststrecke so gewählt sein, dass der Einlasskanal bei Einsetzen der Bremswirkung in ausreichendem Masse geöffnet ist beziehungsweise das Schliesselement in ausreichendem Masse von dem Ventilsitz beabstandet ist und gleichzeitig ein ausreichender Bremsweg zur allmählichen Abbremsung des Schliesselements in Öffnungsrichtung zur Verfügung steht. Auf diese Weise wird einerseits eine sichere Funktionalität des Sitzventils gewährleistet und gleichzeitig die Gefahr eines abrupten Abbremsens beziehungsweise festen Anschlagens des Schliesselements an einer feststehenden Anschlagfläche vermieden.

Es kann weiter von Vorteil sein, wenn das Schliesselement durch eine Führungseinrichtung entlang einer axialen Richtung beweglich geführt ist, wodurch Fehlstellungen des Schliesselements beziehungsweise einseitige Belastungen des Ventilsitzes vermieden werden können. In vorteilhafter Weise kann das Schliesselement einen Führungsinnenraum aufweisen, in dem die Führungseinrichtung zur axialen Führung des Schliesselements verläuft und/oder indem zumindest eine Komponente und/oder ein Abschnitt der Bremseinrichtung angeordnet ist. Es ergibt sich hierdurch eine besonders platzsparende Anordnung bei einem gleichzeitig hohen Mass an Führungssicherheit beziehungsweise Bremssicherheit durch die Bremseinrichtung.

Gemäss einer weiter vorteilhaften Ausgestaltung kann das Schliesselement einen Schliesskopf und einen Führungsabschnitt umfassen, wobei bevorzugt der Schliesskopf und der Führungsabschnitt entlang einer axialen Richtung nacheinander folgen und/oder wobei die Schliesseinrichtung, ausgehend vom Führungsabschnitt, einen sich in axialer Richtung ins Innere des Schliesselements in Richtung zum Schliesskopf hin erstreckenden Führungsinnenraum aufweist. Durch die Unterteilung in Schliesskopf und Führungsabschnitt kann einerseits der Schliesskopf im Hinblick auf besonders günstige Schliesseigenschaften sowie Verschleisssicherheit ausgebildet sein und der Führungsabschnitt kann in vorteilhafter Weise eine sichere Führungsfunktionalität gewährleisten.

Weiter bevorzugt kann die Führungseinrichtung zumindest abschnittsweise durch die Bremseinrichtung gebildet sein. Ebenso kann die Bremseinrichtung mit der Führungseinrichtung gekoppelt sein. Die Bremseinrichtung kann somit eine Führungsfunktionalität bereitstellen beziehungsweise an der Führungseinrichtung verankert sein. Der Bewegungs- beziehungsweise Verformungsspielraum der Bremseinrichtung kann dementsprechend durch die Führungseinrichtung beziehungsweise durch den Eingriff und/oder die Kopplung mit der Führungseinrichtung vordefiniert sein.

Weiter bevorzugt kann die Bremseinrichtung zumindest abschnittsweise relativ zur Führungseinrichtung bewegbar sein, insbesondere zum Abbremsen des Schliesselements. Es besteht auf diese Weise die Möglichkeit, die Führungseinrichtung beziehungsweise einen Teil der Führungseinrichtung feststehend anzuordnen und durch die bewegliche Anordnung der Bremseinrichtung beziehungsweise eines Abschnitts der Bremseinrichtung eine allmähliche Abbremswirkung auf das Schliesselement zu bewirken. Insbesondere kann die Führungseinrichtung das Schliesselement während einer Öffnungsbewegung geeignet führen und die beweglich angeordnete Bremseinrichtung kann die Öffnungsbewegung auffangen beziehungsweise abbremsend aufnehmen. Mit anderen Worten kann die Bremseinrichtung durch die Öffnungsbewegung des Schliesselements relativ zur Führungseinrichtung bewegt werden.

Gemäss einer weiter bevorzugten Ausgestaltung kann zumindest ein Abschnitt und/oder eine Komponente der Bremseinrichtung zum Abbremsen des Schliesselements elastisch, insbesondere linear-elastisch deformierbar sein. Eine linear-elastische Deformierbarkeit kann beispielsweise bei Schraubenfedern vorgesehen sein, die sowohl aus einem metallischen Werkstoff oder auch aus einem Kunststoff hergestellt sein können. Ebenso kann eine linear oder linear-elastische Deformierbarkeit durch eine Komponente aus Gummimaterial, beispielsweise aus einem Elastomerwerkstoff bereitgestellt werden. Eine Komponente und/oder ein Abschnitt mit elastisch oder linear-elastisch deformierbaren Eigenschaften kann mit nur geringem konstruktiven Aufwand eine sichere Abbremswirkung zur allmählichen Abbremsung des Schliesselements bereitstellen, wobei insbesondere die linear-elastische Deformierbarkeit geeignete Rückstellkräfte zur Einnahme des ursprünglichen unverformten Zustands bereitstellt. Es ergibt sich somit eine besonders gute Eignung für den Dauerbetrieb eines erfindungsgemässen Sitzventils.

Gemäss einer weiter vorteilhaften Ausgestaltung ist die Bremseinrichtung zumindest abschnittsweise innerhalb einer Ausnehmung der Führungseinrichtung angeordnet und/oder von der Führungseinrichtung umgeben. Die Bremseinrichtung kann dementsprechend durch die Führungseinrichtung abschnittsweise eingefasst sein, wodurch die Betriebsposition der Bremseinrichtung vordefiniert werden kann. Ferner kann durch die Anordnung der Bremseinrichtung innerhalb einer Ausnehmung beziehungsweise durch das Umgeben der Bremseinrichtung durch die Führungseinrichtung ein etwaiges Verformungsverhalten der Bremseinrichtung, insbesondere einer Komponente oder eines Abschnitts der Bremseinrichtung, in gewünschter Weise beeinflusst werden. Insbesondere besteht die Möglichkeit, etwaige Deformationen vornehmlich oder ausschliesslich entlang einer axialen Richtung zu ermöglichen und durch die Formgebung der Führungseinrichtung Verformungen quer zur axialen Richtung zu begrenzen beziehungsweise vollständig zu unterbinden.

In bevorzugter Weise kann die Führungseinrichtung hülsenförmig ausgebildet sein und/oder einen hülsenförmigen Abschnitt aufweisen. Eine hülsenförmige Ausgestaltung beziehungsweise ein hülsenförmiger Abschnitt kann ferner umlaufende Stufen aufweisen, so dass der Aussenumfang der Führungseinrichtung an unterschiedlichen Stellen entlang einer axialen Richtung ein unterschiedliches Mass aufweisen kann. Beispielsweise kann die Führungseinrichtung in einem Eintrittsbereich des Führungsinnenraums einen grösseren Aussenumfang aufweisen als in einem an den Schliesskopf angrenzenden Bereich des Führungsinnenraums. Der Schliesskopf beziehungsweise der an den Schliesskopf grenzende Bereich des Führungsabschnitts kann somit besonders stabil ausgebildet sein, wodurch die Verschleissbeständigkeit des Schliesselements verbessert werden kann.

Gemäss einer weiter bevorzugten Ausgestaltung kann die Führungseinrichtung zumindest abschnittsweise innerhalb einer Ausnehmung der Bremseinrichtung angeordnet und/oder von der Bremseinrichtung umgeben sein. Bei einer solchen Ausgestaltung kann die Bremseinrichtung in vorteilhafter Weise auch zur Führung des Schliesselements eingesetzt werden. Die Führungseinrichtung kann in diesem Fall unmittelbar die Bremseinrichtung führen und über die Bremseinrichtung mittelbar eine Führungsfunktionalität für das Schliesselement bereitstellen.

Gemäss einer weiter bevorzugten Ausgestaltung kann die Führungseinrichtung an einem Fänger befestigt und/oder abgestützt sein, insbesondere federnd und/oder dämpfend und/oder mittels einer Wellenfeder, Spiralfeder und/oder mittels einer Dämpfplatte federelastisch abgestützt sein. Ebenso kann die Bremseinrichtung an der Führungseinrichtung federelastisch abgestützt sein. Ein solcher Fänger kann relativ zum Ventilkörper feststehend beziehungsweise in einem fest vorgegebenen Abstand positioniert sein. Durch die Befestigung und/oder Abstützung der Führungseinrichtung an dem Fänger kann also die Lage der Führungseinrichtung relativ zum Ventilkörper geeignet definiert und somit auch eine geeignete Führungsfunktionalität zur Bewegung des Schliesselements gewährleisten. Durch eine federnde und/oder dämpfende Abstützung beziehungsweise Befestigung an dem Fänger kann die Führungseinrichtung das Abbremsverhalten des Schliesselements in weiter vorteilhafter Weise begünstigen beziehungsweise das Risiko abrupter oder schlagartiger Bewegungsbegrenzungen des Schliesselements weiter verringern.

Weiter bevorzugt kann die Bremseinrichtung einen Anschlagkörper mit einer Anschlagfläche aufweisen, an der das Schliesselement nach einer Öffnungsbewegung beim Öffnen des Einlasskanals zur Anlage bringbar ist. Dabei kann die Anschlagfläche und/oder der Anschlagkörper insbesondere in Öffnungsrichtung des Schliesselements beweglich und/oder nachgiebig angeordnet sein.

Das Schliesselement kann aus einer den Einlasskanal schliessenden Stellung in Öffnungsrichtung bewegt werden und kann ferner nach zurückgelegter Mindeststrecke zur Anlage an einer Anschlagfläche des Anschlagkörpers gelangen. Bei weiterer Öffnungsbewegung des Schliesselements bewegt sich der Anschlagkörper beziehungsweise die Anschlagfläche gemeinsam mit dem Schliesselement, so dass ein schlagartiges beziehungsweise abruptes Abbremsen des Schliesselements verhindert werden kann. Mit Anlage an der Anschlagfläche tritt also eine Verzögerung des Schliesselements ein, die jedoch durch die bewegliche beziehungsweise nachgiebige Anordnung des Anschlagkörpers und/oder der Anschlagfläche erst allmählich zu einem vollständigen beziehungsweise punktuellen Abbremsen des Schliesskörpers führt.

Gemäss einer weiteren Ausführungsform ist der Anschlagkörper über eine Auffangfeder, die insbesondere als Schraubenfeder ausgebildet sein kann, relativ zur Führungseinrichtung und relativ zum Fänger abgestützt. Schraubenfedern ermöglichen einen verhältnismässig langen Bremsweg und dadurch eine verhältnismässig langsam ansteigende Verzögerung, was sich besonders materialschonend auswirkt.

Ebenso ist es möglich, dass der Anschlagkörper aus einem elastischen Material besteht und/oder einen elastischen Abschnitt zur elastischen Abstützung der Anschlagfläche aufweist. Dabei kann der elastische Abschnitt beispielsweise durch wenigstens eine Materialausnehmung und/oder Materialunterbrechung gebildet sein. Auf diese Weise kann eine Bremsfunktionalität ohne gesondertes Federelement bereitgestellt werden, wodurch sich ein insgesamt robuster und kostengünstiger Aufbau ergibt.

Gemäss einer weiter bevorzugten Ausgestaltung ist der Anschlagkörper in einer Schliessrichtung des Schliesselements formschlüssig an der Führungseinrichtung abgestützt und/oder gehalten. Ferner kann eine Bewegung des Anschlagkörpers und/oder der Anschlagfläche in einer Schliessrichtung beziehungsweise in einer Schliessorientierung des Schliesselements durch formschlüssigen Eingriff mit der Führungseinrichtung begrenzt sein. Dementsprechend kann der Anschlagkörper beziehungsweise die Anschlagfläche aufgrund der Abstützung an der Führungseinrichtung während der allmählichen Abbremsung des Schliesselements im Falle einer Öffnungsbewegung eine definierte Nachgiebigkeit aufweisen. Gleichzeitig erlaubt die Bewegungsbegrenzung des Anschlagkörpers beziehungsweise der Anschlagfläche in einer Schliessrichtung beziehungsweise Schliessorientierung des Schliesselements, dass das Schliesselement vor Erreichen der den Einlasskanal schliessenden Stellung wieder ausser Eingriff mit dem Anschlagkörper beziehungsweise der Anschlagfläche gelangt. Zwischen dem Anschlagkörper beziehungsweise der Anschlagfläche kann demnach in einer den Einlasskanal schliessenden Stellung des Schliesselements ein Mindestabstand eingenommen werden.

In weiter bevorzugter Weise ist zwischen dem Anschlagkörper und der Führungseinrichtung ein Sprengring angeordnet. Ebenso kann an einem Aussenumfang des Anschlagkörpers ein Vorsprung ausgebildet sein, der in eine Ausnehmung der Führungseinrichtung eingreift und/oder einen Kragenabschnitt der Führungseinrichtung hinter greift. Ebenso ist es möglich, dass an einem Aussenumfang des Anschlagkörpers eine Ausnehmung ausgebildet ist, in die ein Vorsprung der Führungseinrichtung eingreift, insbesondere ein am Innenumfang der Führungseinrichtung ausgebildeter Vorsprung.

Schliesslich kann nach einer bevorzugten Ausgestaltung an einem Innenumfang des Anschlagkörpers ein Kragenabschnitt ausgebildet sein, der einen Kopfabschnitt der Führungseinrichtung hintergreift. An einem Aussenumfang der Führungseinrichtung kann ferner ein Kragenabschnitt ausgebildet sein, der den Anschlagkörper hintergreift.

Durch derartige Ausgestaltungen kann die Relativbeweglichkeit zwischen Anschlagkörper und Führungseinrichtung in vorteilhafter Weise definiert beziehungsweise begrenzt werden. Beispielsweise kann der Sprengring innerhalb einer Innenumfangsnut der Führungseinrichtung angeordnet und hierdurch in einer vorgegebenen Position festgelegt sein. Gleichzeitig kann der Sprengring in eine Aussenumfangsnut des Anschlagkörpers eingreifen, welche jedoch eine entlang einer axialen Richtung grössere Erstreckung aufweist als die Innenumfangsnut der Führungseinrichtung. Der Sprengring ermöglicht somit eine Beweglichkeit des Anschlagkörpers bis zum Erreichen der Endlage der jeweiligen Aussenumfangsnut des Anschlagkörpers.

Gemäss einer weiteren Ausgestaltung des Sitzventils kann der Anschlagkörper hülsenförmig und/oder mit einer umlaufenden Stufe und/oder mit einem umlaufenden Stützkragen ausgebildet sein. Bevorzugt ist dabei die Anschlagfläche an der Stufe oder dem Stützkragen ausgebildet und/oder der Anschlagkörper über den Stützkragen an einer Auffangfeder abgestützt. Ein solcher hülsenförmiger Anschlagkörper kann besonders kostengünstig hergestellt werden und sicher innerhalb eines Führungsinnenraums des Schliesselements positioniert werden. Die Führung eines hülsenförmigen Anschlagkörpers innerhalb des Führungsinnenraums ist sicher zu bewerkstelligen und gewährleistet somit ein hohes Mass an Funktionalität des Sitzventils. Durch Abstützung des Anschlagkörpers über den Stützkragen an einer Auffangfeder ergibt sich eine günstige Kraftverteilung und eine unmittelbare Kontaktierung der Auffangfeder durch das Schliesselement kann vermieden werden, was sich günstig auf geringe Flächenpressungen auswirkt.

Gemäss einer weiteren vorteilhaften Ausgestaltung ist eine Auffangfeder der Bremseinrichtung in einer Aufnahme der Führungseinrichtung angeordnet, insbesondere an einer ringförmig umlaufenden Aufnahme. Dabei kann eine Auffangfeder der Bremseinrichtung auf einem Dämpfelement gelagert sein. Dementsprechend kann das Dämpfelement ebenfalls in einer ringförmig umlaufenden Aufnahme der Führungseinrichtung angeordnet sein, bevorzugt auf einer von dem Schliesselement abgewandten Seite der Auffangfeder in axialer Richtung. Ferner kann eine Auffangfeder axial benachbart zum Schliesselement und/oder vollständig ausserhalb des Führungsinnenraums des Schliesselements angeordnet sein. Die Auffangfeder kann somit unabhängig von den Abmessungen des Führungsinnenraums ausgebildet sein, insbesondere mit einem Durchmesser der grösser ist als ein Durchmesser des Führungsinnenraums. Es ergibt sich somit eine verhältnismässig hohe Stabilität der Auffangfeder. Ebenso ist es jedoch auch möglich, dass die Auffangfeder wenigstens abschnittsweise innerhalb des Führungsinnenraums des Schliesselements angeordnet ist, was besonders platzsparend realisiert werden kann und gleichzeitig eine Führung der Auffangfeder während der Deformation zur Abbremsung des Schliesselements ermöglicht.

Gemäss einer weiteren Ausführungsform des Sitzventils kann die Führungseinrichtung und/oder die Bremseinrichtung, insbesondere der Anschlagkörper, einen Luftdurchlass aufweisen, bevorzugt zur Belüftung und/oder Entlüftung des Führungsinnenraums während Öffnungs- und/oder Schliessbewegungen des Schliesselements. Ebenso kann ein Luftdurchlass durch den Fänger hindurchgeführt sein. Durch eine derartige Anordnung eines Luftdurchlasses können Öffnungs- und Schliessbewegungen ohne oder mit nur geringen Beeinträchtigungen durch Druckänderungen im Führungsinnenraum des Schliesselements bewerkstelligt werden. Weder ein zu hoher Überdruck noch ein zu niedriger Unterdruck beeinträchtigen die jeweils gewünschte Bewegung des Schliesselements.

Es kann ferner von Vorteil sein, wenn ein Luftdurchlass des Anschlagkörpers durch Anlage des Schliesselements verschliessbar und/oder durch Relativbewegung zwischen Anschlagkörper und Führungseinrichtung geöffnet und/oder geschlossen wird. Durch derartiges Schliessen beziehungsweise Öffnen eines Luftdurchlasses kann gezielt Einfluss auf die jeweils vorherrschenden Druckverhältnisse im Führungsinnenraum des Schliesselements genommen werden, so dass die Bewegung des Schliesselements in gewünschter Weise beeinflussbar ist.

Ein weiterer Aspekt der vorliegenden Erfindung betrifft ein Sitzventil, insbesondere vor einem Kolbenkompressor, mit einem einen Einlasskanal aufweisenden Ventilkörper, mit einem zum Öffnen oder Schliessen des Einlasskanals beweglich angeordneten Schliesselement, mit einer Schliessfeder, die das Schliesselement mit einer zum Schliessen des Einlasskanals orientierten Vorspannkraft beaufschlagt, und mit einer Bremseinrichtung, die einen zur Dämpfung einer Öffnungsbewegung des Schliesselements beim Öffnen des Einlasskanals angeordneten Bewegungsdämpfer aufweist. Die obigen Ausführungen zu dem erfindungsgemässen Sitzventil gelten entsprechend auch für das Sitzventil gemäss dem weiteren Aspekt der Erfindung.

Ein noch weiterer Aspekt der Erfindung betrifft eine Schliesseinrichtung, vorzugsweise für ein voranstehendes Sitzventil, mit einem zum Öffnen und Schliessen eines Einlasskanals beweglich angeordneten Schliesselement, mit einer Schliessfeder, die das Schliesselement mit einer zum Schliessen des Einlasskanals orientierten Vorspannkraft beaufschlagt, und mit einer Bremseinrichtung, die unabhängig von dem Schliesselement angeordnet ist und die eine Öffnungsbewegung des Schliesselements beim Öffnen des Einlasskanals unabhängig von der Schliessfeder allmählich abbremst.

Ein noch weiterer Aspekt der Erfindung betrifft eine Schliesseinrichtung, vorzugsweise für ein voranstehend beschriebenes Sitzventil, mit einem zum Öffnen und Schliessen eines Einlasskanals beweglich angeordneten Schliesselement, mit einer Schliessfeder, die das Schliesselement mit einer zum Schliessen des Einlasskanals orientierten Vorspannkraft beaufschlagt, und mit einer Bremseinrichtung, die einen zur Dämpfung einer Öffnungsbewegung des Schliesselements beim Öffnen des Einlasskanals angeordneten Bewegungsdämpfer aufweist.

Schliesslich betrifft die Erfindung auch einen Kolbenkompressor mit einem voranstehend beschriebenen Sitzventil und/oder mit einer voranstehend beschriebenen Schliesseinrichtung.

Die obigen Ausführungen zu den möglichen Ausgestaltungen beziehungsweise unterschiedlichen Aspekten eines erfindungsgemässen Sitzventils gelten entsprechend auch für erfindungsgemässe Schliesseinrichtungen beziehungsweise auch für einen erfindungsgemässen Kolbenkompressor.

### Kurze Beschreibung der Zeichnungen

Die vorliegende Erfindung wird nachfolgend anhand vorteilhafter Ausführungsformen unter Bezugnahme auf die beigefügten Zeichnungen näher erläutert.

Es zeigen:
- Fig. 1: einen perspektivischen Längsschnitt einer ersten Ausführungsform einer Schliesseinrichtung des erfindungsgemässen Sitzventils;
- Fig. 2: die in Figur 1 dargestellte Schliesseinrichtung ohne Bremseinrichtung;
- Fig. 3: die Bremseinrichtung der Schliesseinrichtung gemäss Figur 1;
- Fig. 4: eine perspektivische Schnittdarstellung eines erfindungsgemässen Sitzventils;
- Fig. 5: einen Längsschnitt einer weiteren Ausführungsform eines Schliesselements;
- Fig. 6 bis 10: je einen Längsschnitt von weiteren Ausführungsformen eines Schliesselements;
- Fig. 11: eine perspektivische Längsschnittdarstellung einer weiteren Ausführungsform eines Schliesselements des erfindungsgemässen Sitzventils.

Grundsätzlich sind in den Zeichnungen gleiche Teile mit gleichen Bezugszeichen versehen.

### Wege zur Ausführung der Erfindung

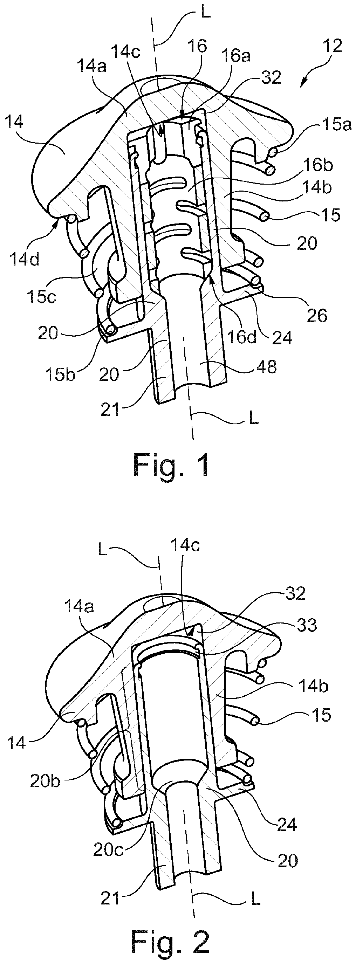

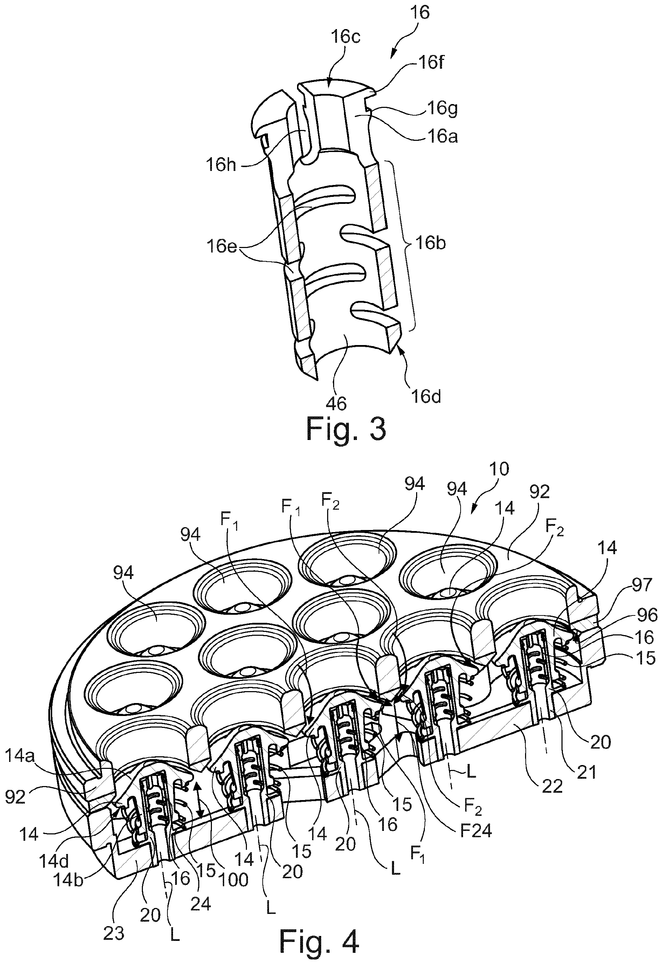

Fig. 4 zeigt eine perspektivische Schnittansicht eines Ausführungsbeispiels eines erfindungsgemässen Sitzventils 10. Fig. 1 zeigt eine perspektivische Längsschnittdarstellung einer ersten Ausführungsform einer Schliesseinrichtung 12, welche beispielsweise für das in Fig. 4 dargestellte Sitzventil 10 geeignet ist. Ein solches Sitzventil ist insbesondere für den Einsatz in Kolbenkompressoren ausgebildet. Das Sitzventil 10 umfasst einen in Fig. 1 nicht gezeigten Ventilkörper mit einer Mehrzahl von Einlasskanälen, und umfasst eine Mehrzahl von Schliesseinrichtungen 12. Figur 2 zeigt die in Figur 1 dargestellte Schliesseinrichtung ohne Bremseinrichtung 16. Figur 3 zeigt die Bremseinrichtung 16 der Schliesseinrichtung 12 gemäss Figur 1.

Die Schliesseinrichtung 12 weist ein zum Öffnen und Schliessen eines Einlasskanals in einer Längsrichtung L beweglich angeordnetes Schliesselement 14 sowie eine Schliessfeder 15 auf, wobei die Schliessfeder 15 das Schliesselement 14 mit einer zum Schliessen des Einlasskanals orientierten Vorspannkraft beaufschlagt. Ferner weist die Schliesseinrichtung 12 eine Bremseinrichtung 16 auf, die getrennt beziehungsweise unabhängig von dem Schliesselement 14 angeordnet ist, und die eine Öffnungsbewegung des Schliesselements 14 beim Öffnen des Einlasskanals unabhängig von der Schliessfeder 15 allmählich abbremst, sobald das Schliesselement 14 mit der Bremseinrichtung 16 in Berührung gelangt. Aufgrund der getrennten beziehungsweise unabhängigen Anordnung des Schliesselements 14 von der Bremseinrichtung 16 besteht keine unmittelbare Verbindung zwischen Schliesselement 14 und Bremseinrichtung 16.

In der Stellung gemäss Fig. 1 befindet sich das Schliesselement 14 in einer von der Bremseinrichtung 16 beabstandeten Stellung, so dass das Schliesselement 14 in Anlage mit einem Ventilsitz eines hier nicht gezeigten Ventilkörpers angeordnet sein kann. Aus dieser Stellung heraus kann das Schliesselement 14 zum Öffnen des Einlasskanals beziehungsweise zum Abheben vom Ventilsitz des Ventilkörpers weg und damit auf die Bremseinrichtung 16 zu bewegt werden. Dementsprechend kann das Schliesselement 14 relativ zur Bremseinrichtung 16 in einer axialen Richtung entlang der Längsachse L bewegt werden. Eine Öffnungsbewegung erfolgt dementsprechend entlang einer in Fig. 1 nach unten gerichteten Orientierung.

Zur beweglichen Führung des Schliesselements 14 ist ferner eine Führungseinrichtung 20 vorgesehen. Die Führungseinrichtung 20 kann an einem z.B. in Figur 4 dargestellten Fänger 22 abgestützt beziehungsweise befestigt sein. Der Fänger 22 kann relativ zu einem hier nicht gezeigten Ventilkörper feststehend positioniert beziehungsweise in einem fest vorgegebenen Abstand angeordnet sein. Zur Abstützung der Führungseinrichtung 20 an dem Fänger 22 kann die Führungseinrichtung 20 einen Stützabschnitt 24 aufweisen. Bei dem Stützabschnitt 24 kann es sich um einen kragenartigen Vorsprung handeln, der eine Einschubtiefe eines Befestigungsabschnitts 21 der Führungseinrichtung 20 in dem Fänger 22 begrenzt. An der Stützeinrichtung 24 kann ein Lagersitz 26 für die Abstützung der Schliessfeder 15 vorgesehen sein. Die Schliessfeder 15 kann somit zwischen dem Schliesselement 14 und dem Lagersitz 26 wirken.

Das Schliesselement 14 weist einen Schliesskopf 14a sowie einen Führungsabschnitt 14b auf, wobei der Schliesskopf 14a und der Führungsabschnitt 14b entlang einer axialen Richtung L nacheinander folgen, wobei das Schliesselement 14 vorzugsweise aus einem Stück besteht. Das Schliesselement 14 weist ferner ausgehend von dem Führungsabschnitt 14b einen sich in axialer Richtung L ins Innere des Schliesselements 14 in Richtung zum Schliesskopf 14a hin erstreckenden Führungsinnenraum 32 auf. Der Führungsinnenraum 32 dient der Aufnahme der Führungseinrichtung 20 beziehungsweise der Bremseinrichtung 16. Zumindest eine Komponente oder ein Abschnitt der Bremseinrichtung 16 und/oder der Führungseinrichtung 20 kann in dem Führungsinnenraum 32 aufgenommen sein.

In der Ausführungsform gemäss Fig. 1 umfasst die Bremseinrichtung 16 einen Anschlagkörper 16a sowie einen federelastischen Abschnitt 16b, wobei der elastische Abschnitt 16b eine Auflagefläche 16d aufweist, welche auf einer Auflagefläche 20c der Führungseinrichtung 20 aufliegt, sodass der Anschlagkörper 16a entlang der axialen Richtung L federelastisch abstützt ist. An dem Anschlagkörper 16a ist eine Anschlagfläche 16c ausgebildet, an der das Schliesselement 14 bei einer Öffnungsbewegung zum Öffnen eines Einlasskanals zur Anlage kommen kann. Insbesondere kann das Schliesselement 14 über eine Endfläche 14c des Führungsinnenraums 32 an der Anschlagfläche 16c zur Anlage kommen. Der Anschlagkörper 16a beziehungsweise die an dem Anschlagkörper 16a ausgebildete Anschlagfläche 16c sind entlang der axialen Richtung L beweglich beziehungsweise nachgiebig angeordnet, insbesondere aufgrund des federelastische Eigenschaften aufweisenden elastischen Abschnitts 16b.

Der Fig. 1 kann ferner entnommen werden, dass der elastische Abschnitt 16b sowie ein Abschnitt des Anschlagkörpers 16a zumindest teilweise innerhalb der Führungseinrichtung 20 angeordnet beziehungsweise aufgenommen sind. Innerhalb der Führungseinrichtung 20 kann eine Auflagefläche 20c vorgesehen sein, an welcher der elastische Abschnitt 16b abgestützt ist.

Ferner weist die Führungseinrichtung 20 eine innen umlaufende Vertiefung 33 auf. Zudem weist der Anschlagkörper 16a einen vorstehenden Kragen 16f sowie eine vorstehende Nase 16g auf.
Diese Elemente 33, 16f und 16g greifen derart ineinander, dass die Bewegungen des Anschlagkörpers 16a, insbesondere in Richtung des Schliesselements 14 begrenzt werden. Dementsprechend kann in der in Fig. 1 gezeigten Ausgangsstellung zwischen der Anschlagfläche 16c und der gegenüberliegend angeordneten Endfläche 14c des Schliesselements 14c ein Mindestabstand beibehalten werden. Bei einer Öffnungsbewegung des Schliesselements 14 erfolgt somit zunächst keine Bremswirkung, bis das Schliesselement 14 über seine Endfläche 14c des Führungsinnenraums 32 zur Anlage an der Anschlagfläche 16c des Anschlagkörpers 16a gelangt. Bei weiterer Öffnungsbewegung wird dann der Anschlagkörper 16a zusammen mit dem Schliesselement 14 in einer Öffnungsrichtung entlang der axialen Richtung L bewegt, um hierbei eine Komprimierung des elastischen Abschnitts 16b zu bewirken. Durch die Komprimierung des elastischen Abschnitts 16b erfolgt demzufolge ein allmähliches Abbremsen des Schliesselements 14. Insbesondere kann nach erfolgter Anlage der Endfläche 14c an die Anschlagfläche 16c ein abruptes Abbremsen beziehungsweise ein abruptes Anschlagen des Schliesselements 14 an einem feststehenden Anschlag und der Verschleiss an den hier in Rede stehenden Komponenten, insbesondere an dem Schliesselement 14, durch das Komprimieren des elastischen Abschnitts 16b vermieden werden.

Nach Erreichen einer Endlage in Öffnungsrichtung des Schliesselements 14 wird dieses wieder in Schliessrichtung - in Fig. 1 nach oben gerichtet - bewegt. Diese Bewegung in Schliessrichtung wird dabei unterstützt durch die Schliessfeder 15 und auch durch die Entspannung des elastischen Abschnitts 16b, wobei die Bewegung in Schliessrichtung des Schliesselements 14 durch Entspannung des elastischen Abschnitts 16b lediglich über eine begrenzte Strecke unterstützt werden kann, insbesondere bis zum Erreichen der oberen Endlage des Anschlagkörpers 16a, wie in Fig. 1 gezeigt.

Der Anschlagkörper 16a kann aus einem Metallwerkstoff oder auch aus einem Kunststoffmaterial hergestellt sein. Im Falle eines Kunststoffmaterials kann der Anschlagkörper 16a dämpfende Eigenschaften aufweisen. Insbesondere kann der Anschlagkörper aus einem Elastomerwerkstoff oder dergleichen hergestellt sein und dadurch Öffnungsbewegungen des Schliesselements 14 in geeigneter Weise abdämpfen und hierdurch ein allmähliches Abbremsen in besonders bevorzugter Weise verschleissarm ermöglichen.

Wie den Figuren 1 und 3 weiter entnommen werden kann, ist der Auffangkörper 16a mit einem Luftdurchlass 46 und die Führungseinrichtung 20 ebenfalls mit einem Luftdurchlass 48 ausgestattet. Die Luftdurchlässe der einzelnen Komponenten können miteinander in Fluidkommunikation stehen. Dabei kann der Luftdurchlass 48 der Führungseinrichtung durch den Fänger 22 hindurchführen. Aufgrund der Anordnung der Luftdurchlässe kann eine Belüftung und/oder Entlüftung des Innenraums von Führungseinrichtung 20 und Bremseinrichtung 16 bei Öffnungs- und/oder Schliessbewegungen des Schliesselements 14 sichergestellt werden.

Die Fig. 4 zeigt eine perspektivische Schnittansicht eines Sitzventils 10 umfassend die in Figur 1 dargestellte Schliesseinrichtung 12. Das Sitzventil 10 gemäss Fig. 4 ist mit einem Ventilkörper 92, in dem eine Mehrzahl von Einlasskanälen 94 ausgebildet sind, sowie mit einer Mehrzahl an Schliesselementen 14 ausgestattet, wobei jedes Schliesselement 14 einem der Einlasskanäle 94 zugeordnet ist. Die Schliesselemente 14 sind in geöffnetem Zustand dargestellt.

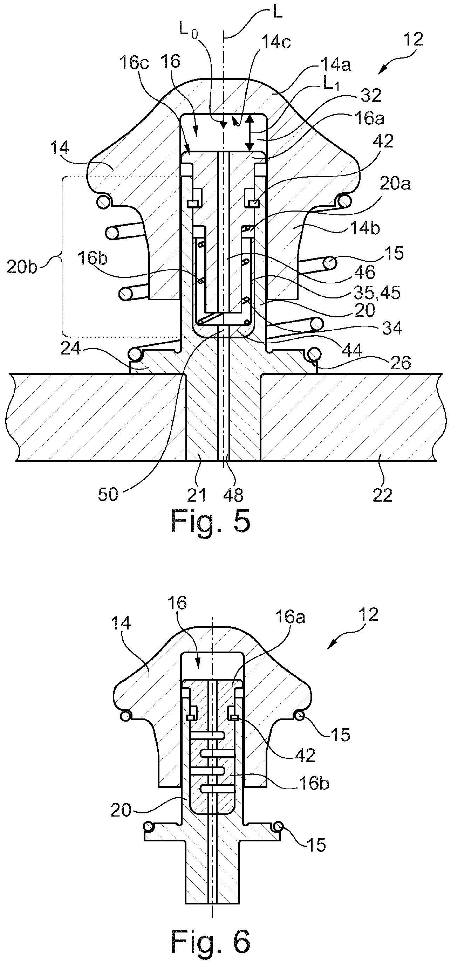

Das in Fig. 4 gezeigte Sitzventil 10 weist somit eine Mehrzahl von Schliessventilen auf, wobei jedes Schliessventil zumindest durch einen Einlasskanal 94 sowie ein jeweils zugeordnetes Schliesselement 14 gebildet sein kann. Vorzugsweise ist, wie in Figur 4 dargestellt, für jedes Schliesselement 14 eine Bremseinrichtung 16 vorgesehen. Die jeweilige Bremseinrichtung 16 kann beispielsweise mit der in den Fig. 1 bis 3 gezeigten Ausführungsform oder mit gemäss einer der in den Figuren 5 bis 11 dargestellten Ausführungsformen ausgebildet sein. Dementsprechend kann jedes der Schliessventile in Fig. 4 entsprechend den Fig. 1 bis 3 und 5 bis 11 gezeigten Ausführungsformen für Sitzventile 10 ausgebildet sein.

Wie der Fig. 4 ferner entnommen werden kann, mündet jeder Einlasskanal 94 in einen Ventilsitz 96, wobei jeder Ventilsitz 96 durch ein Schliesselement 14 verschliessbar ist. Jedes der Schliesselemente 14 ist somit einem Ventilsitz 96 zugeordnet, wobei die Schliesselemente 14 in axialer Richtung L jeweils gegenüber liegend dem zugeordneten Ventilsitz 96 angeordnet sind, und wobei die Schliesselemente 14 derart in axialer Richtung L verschiebbar sind, dass der Ventilsitz 96 und damit der jeweilige Eingangskanal 94 geöffnet beziehungsweise geschlossen werden kann.

Weiterhin weist das Sitzventil 10 gemäss Fig. 4 einen Fänger 22 sowie in axialer Richtung L verlaufende und am Fänger 22 befestigte Führungseinrichtungen 20 für die Schliesselemente 14 auf. Ferner sind Schliessfedern 15 vorgesehen, um auf die Schliesselemente 14 eine zum Ventilsitz 96 beziehungsweise zum Ventilkörper 92 hin ausgerichtete Vorspannkraft zu bewirken. Die Schliesselemente 14 werden auch als Poppet oder Ventilkegel bezeichnet.

Gemäss Fig. 4 umfasst der Fänger 22 eine Haltestruktur 23, welche vorzugsweise senkrecht zur axialen Richtung L verläuft, wobei an der Haltestruktur 23 die in axialer Richtung L verlaufenden Führungseinrichtungen 20 angeordnet sind, an welchen die Schliesselemente 14 in axialer Richtung L beweglich beziehungsweise linear beweglich angeordnet und vorzugsweise gleitend gelagert sind. Die Führungseinrichtungen 20 sind im dargestellten Ausführungsbeispiel hohlzylinderförmig ausgestaltet, können aber auch entsprechend den in Fig. 1 bis 3 und 5 bis 11 gezeigten Ausführungsbeispielen ausgeführt sein.

Die Schliesselemente 14 umfassen im dargestellten Ausführungsbeispiel gemäss Fig. 4 einen Schliesskopf 14a sowie einen Führungsabschnitt 14b, wobei das Schliesselement 14 konzentrisch ausgestaltet ist und entlang der Symmetrieachse eine Bohrung aufweist, welche mit der Führungseinrichtung 20 ein Gleitlager ausbildet, sodass die Führungseinrichtung 20 bezüglich dem Schliesselement 14 eine Innenführung ausbildet. Die Bohrung kann somit einen Führungsinnenraum 32 ausbilden.

Der Schliesskopf 14a umfasst zudem eine Auflage 14d, welche vorteilhafterweise flächig ausgestaltet ist. Die Schliessfeder 15 umfasst ein erstes Federende 15a sowie ein zweites Federende 15b, wobei das erste Federende 15a an der Auflage 14d und das zweite Federende 15b am Stützabschnitt 24 anliegt, um eine zum Ventilsitz 96 hin wirkende Vorspannkraft auf das Schliesselement 14 zu bewirken. Die Schliessfeder 15 weist einen Innenraum 15c auf. Die Schliessfeder 15 umschliesst die Führungseinrichtung 20 sowie das Schliesselement 14 in axialer Richtung L entlang eines Teilabschnittes 100 von aussen, sodass sowohl die Führungseinrichtung 20 als auch das Schliesselement 14 entlang dieses Teilabschnittes 100 innerhalb des Innenraumes 15c der Schliessfeder 15 angeordnet sind. Die Schliessfeder 15 weist in axialer Richtung L zum Ventilsitz 96 hin einen zunehmenden Durchmesser auf, wobei sich die Schliessfeder 15 in einer bevorzugten Ausführungsform konusförmig erweitert. Vorteilhafterweise ist die Schliessfeder 15 derart ausgestaltet, dass sie das Schliesselement 14 nur an der Auflage 14d berührt. Die sich erweiternde Schliessfeder 15 weist den Vorteil auf, dass das zweite Federende 15b eine geringeren Durchmesser beziehungsweise eine geringere Auflagefläche aufweist als das erste Federende 15a, was zur Folge hat, dass sich im Bereich des Fängers 22 ein grösserer bauteilfreier Zwischenraum ergibt, der vom Fluid F durchströmbar ist. In Fig. 4 sind die Fluidströme F₁, F₂ von zwei nebeneinander liegend angeordneten Ventilen beispielhaft dargestellt.

Die Fluidströme F₁, F₂ werden durch die Stirnseite des Schliesselementes 14 quer zur axialen Richtung L abgelenkt, sodass die Fluidströme F₁, F₂ beispielsweise wie dargestellt dem Fänger 22 zuströmen. Die sich überkreuzenden Fluidströme F₁, F₂ umströmen insbesondere Teile des benachbarten Schliesselementes 14 beziehungsweise dessen Schliessfeder 15. Um diese Fluidströme F₁, F₂ nach Möglichkeit nicht zu behindern ist der bauteilfreie Zwischenraum, insbesondere der sich zum Fänger 22 hin erweiternde bauteilfreie Zwischenraum vorteilhaft. Besonders vorteilhaft sind die sich zum Fänger 22 hin verjüngenden Schliesselemente 14. Besonders vorteilhaft ist zudem die Anordnung der Schliessfedern 15, weil diese die Fluidströmung F₁, F₂ nur geringfügig, vorzugsweise vernachlässigbar geringfügig beeinflussen.

Gemäss einer weiter vorteilhaften Ausgestaltung des Sitzventils in Fig. 4 ist eine Sitzplatte 97 vorgesehen, welche derart angeordnet ist, dass der Schliesskopf 14a eines Schliesselements 14 daran anschlägt und dadurch den jeweiligen Einlasskanal 94 verschliesst. Der Ventilsitz 96 ist dementsprechend in der Sitzplatte 97 beziehungsweise durch ein Teil der Sitzplatte 97 ausgebildet. Die Sitzplatte 97 ist auf Grund des Ventilsitzes 96 beziehungsweise des einwirkenden Schliesskopfs 14a ein Verschleissteil und kann vorteilhafterweise auf einfache Weise ausgetauscht werden. In einer weiteren möglichen Ausgestaltung kann auf die Sitzplatte 97 verzichtet werden, sodass der Schliesskopf 14a direkt an den Ventilkörper 92 anschlägt und der Ventilsitz 96 Teil des Ventilkörpers 92 ist.

In einer weiteren Ausführungsform kann das Sitzventil 10 auch derart ausgestaltet sein, dass dieses nur einen einzigen Einlasskanal 94 sowie ein einziges Schliesselement 14 mit Schliessfeder 15 umfasst. Sämtliche in Bezug auf Fig. 4 ausgeführten Einzelheiten sind damit auf die Ausführungsformen gemäss Fig. 1 bis 3 und 5 bis 11 übertragbar beziehungsweise mit den diesbezüglich beschriebenen Ausführungsformen kombinierbar.

Die Fig. 5 zeigt eine Längsschnittdarstellung einer weiteren erfindungsgemässen Schliesseinrichtung 12. Die Schliesseinrichtung 12 weist ein zum Öffnen und Schliessen eines Einlasskanals beweglich angeordnetes Schliesselement 14 sowie eine Schliessfeder 15 auf, die das Schliesselement 14 mit einer zum Schliessen des Einlasskanals orientierten Vorspannkraft beaufschlagt. Ferner weist die Schliesseinrichtung 12 eine Bremseinrichtung 16 auf, die getrennt beziehungsweise unabhängig von dem Schliesselement 14 angeordnet ist und die eine Öffnungsbewegung des Schliesselements 14 in Öffnungsrichtung L₀ beim Öffnen des Einlasskanals unabhängig von der Schliessfeder 15 allmählich abbremst. Aufgrund der getrennten beziehungsweise unabhängigen Anordnung des Schliesselements 14 von der Bremseinrichtung 16 besteht keine unmittelbare Verbindung zwischen Schliesselement 14 und Bremseinrichtung 16.

In der Stellung gemäss Fig. 5 befindet sich das Schliesselement 14 in einer von der Bremseinrichtung 16 beabstandeten Stellung, vorzugsweise in einer den Einlasskanal schliessenden Stellung S₁, so dass das Schliesselement 14 in Anlage mit einem Ventilsitz eines hier nicht gezeigten Ventilkörpers angeordnet sein kann. Aus dieser Stellung heraus kann das Schliesselement 14 zum Öffnen des Einlasskanals beziehungsweise zum Abheben vom Ventilsitz des Ventilkörpers weg und damit auf die Bremseinrichtung 16 zu bewegt werden. Dementsprechend kann das Schliesselement 14 relativ zur Bremseinrichtung 16 in einer axialen Richtung entlang einer Längsachse L um eine Mindeststrecke L₁ bewegt werden, bevor die Endfläche 14c die Anschlagfläche 16c berührt. Eine Öffnungsbewegung erfolgt dementsprechend entlang einer in Fig. 5 nach unten gerichteten Orientierung.

Zur beweglichen Führung des Schliesselements 14 ist ferner eine Führungseinrichtung 20 vorgesehen. Die Führungseinrichtung 20 kann einen hülsenförmigen Abschnitt 20b aufweisen, wobei die Bremseinrichtung 16 zumindest abschnittsweise innerhalb einer Ausnehmung 20a des hülsenförmigen Abschnittes 20b angeordnet ist. Die Führungseinrichtung 20 kann an einem Fänger 22 abgestützt beziehungsweise befestigt sein. Der Fänger 22 kann relativ zu einem hier nicht gezeigten Ventilkörper feststehend positioniert beziehungsweise in einem fest vorgegebenen Abstand angeordnet sein. Zur Abstützung der Führungseinrichtung 20 an dem Fänger 22 kann die Führungseinrichtung 20 einen Stützabschnitt 24 aufweisen. Bei dem Stützabschnitt 24 kann es sich um einen kragenartigen Vorsprung handeln, der eine Einschubtiefe der Führungseinrichtung 20 in dem Fänger 22 begrenzt. An der Stützeinrichtung 24 kann ein Lagersitz 26 für die Abstützung der Schliessfeder 15 vorgesehen sein. Die Schliessfeder 15 kann somit zwischen dem Schliesselement 14 und dem Lager 26 wirken.

Das Schliesselement 14 weist einen Schliesskopf 14a sowie einen Führungsabschnitt 14b auf, wobei der Schliesskopf 14a und der Führungsabschnitt 14b entlang einer axialen Richtung L nacheinander folgen. Das Schliesselement 14 weist ferner ausgehend von dem Führungsabschnitt 14b einen sich in axialer Richtung L ins Innere des Schliesselements 14 in Richtung zum Schliesskopf 14a hin erstreckenden Führungsinnenraum 32 auf. Der Führungsinnenraum 32 dient der Aufnahme der Führungseinrichtung 20 beziehungsweise der Bremseinrichtung 16. Zumindest eine Komponente oder ein Abschnitt der Bremseinrichtung 16 und/oder der Führungseinrichtung 20 kann in dem Führungsinnenraum 32 aufgenommen sein.

In der Ausführungsform gemäss Fig. 5 weist die Bremseinrichtung 16 eine Auffangfeder 34 auf, die entlang einer axialen Richtung L einen Anschlagkörper 16a federelastisch abstützt. An dem Anschlagkörper 16a ist eine Anschlagfläche 16c ausgebildet, an der das Schliesselement 14 bei einer Öffnungsbewegung zum Öffnen eines Einlasskanals zur Anlage kommen kann. Insbesondere kann das Schliesselement 14 über eine Endfläche 14c des Führungsinnenraums 32 an der Anschlagfläche 16c zur Anlage kommen. Der Anschlagkörper 16a beziehungsweise die an dem Anschlagkörper 16a ausgebildete Anschlagfläche 16c sind entlang der axialen Richtung L beweglich beziehungsweise nachgiebig angeordnet, insbesondere aufgrund der federelastischen Abstützung durch die Auffangfeder 34. Die Auffangfeder 34 kann dabei insbesondere als Spiralfeder oder dergleichen ausgebildet sein.

Der Fig. 5 kann ferner entnommen werden, dass die Auffangfeder 34 sowie ein Abschnitt des Anschlagkörpers 16a innerhalb der Führungseinrichtung 20 angeordnet beziehungsweise aufgenommen sind. Innerhalb der Führungseinrichtung 20 kann eine Federaufnahme 35 vorgesehen sein, in der die Auffangfeder 34 und auch ein Abschnitt des Anschlagkörpers 16a aufgenommen ist. Die Federaufnahme 35 kann topfförmig und als von der Führungseinrichtung 20 separate Komponente ausgebildet sein. Die Auffangfeder 34 sowie der Anschlagkörper 16a sind innerhalb der Führungseinrichtung 20 und/oder innerhalb der Federaufnahme 35 entlang einer axialen Richtung L geführt.

Ferner ist zwischen der Führungseinrichtung 20 und dem Anschlagkörper 16a ein Sprengring 42 angeordnet, durch den Bewegungen des Anschlagkörpers 16a, insbesondere in Richtung des Schliesselements 14 begrenzt werden. Dementsprechend kann in der in Fig. 5 gezeigten Ausgangsstellung zwischen der Anschlagfläche 16c und der gegenüberliegend angeordneten Endfläche 14c des Schliesselements 14c ein Mindestabstand beibehalten werden. Bei einer Öffnungsbewegung des Schliesselements 14 erfolgt somit zunächst keine Bremswirkung, bis das Schliesselement 14 über seine Endfläche 14c des Führungsinnenraums 32 zur Anlage an der Anschlagfläche 16c des Anschlagkörpers 16a gelangt. Bei weiterer Öffnungsbewegung wird dann der Anschlagkörper 16a zusammen mit dem Schliesselement 14 in einer Öffnungsrichtung entlang der axialen Richtung L bewegt, um hierbei eine Komprimierung der Auffangfeder 34 zu bewirken. Durch die Komprimierung der Auffangfeder 34 erfolgt demzufolge ein allmähliches Abbremsen des Schliesselements 14. Insbesondere kann ein abruptes Abbremsen beziehungsweise ein abruptes Anschlagen des Schliesselements 14 an einem feststehenden Anschlag und der Verschleiss an den hier in Rede stehenden Komponenten, insbesondere an dem Schliesselement 14, vermieden werden.

Nach Erreichen einer Endlage in Öffnungsrichtung des Schliesselements 14 wird dieses wieder in Schliessrichtung - in Fig. 1 nach oben gerichtet - bewegt. Diese Schliessbewegung wird dabei unterstützt durch die Schliessfeder 15 und auch durch die Entspannung der Auffangfeder 34, wobei die Schliessbewegung des Schliesselements 14 durch Entspannung der Auffangfeder 34 lediglich über eine begrenzte Strecke unterstützt werden kann, insbesondere bis zum Erreichen der oberen Endlage des Anschlagkörpers 16a, wie in Fig. 5 gezeigt.

Der Anschlagkörper 16a kann aus einem Metallwerkstoff oder auch aus einem Kunststoff Material hergestellt sein. Im Falle eines Kunststoff Materials kann der Anschlagkörper 16a dämpfende Eigenschaften aufweisen. Insbesondere kann der Anschlagkörper aus einem Elastomer Werkstoff oder dergleichen hergestellt sein und dadurch Öffnungsbewegungen des Schliesselements 14 in geeigneter Weise abdämpfen und hierdurch ein allmähliches Abbremsen in besonders bevorzugter Weise verschleissarm ermöglichen. Ferner können dämpfende Eigenschaften der Bremseinrichtung 16 dadurch erreicht werden, dass zwischen der Auffangfeder 34 und dem Anschlagkörper 16a oder auch zwischen der Auffangfeder 34 und der Führungseinrichtung 20 ein Dämpfelement beziehungsweise ein Bewegungsdämpfer vorgesehen ist. Beispielsweise kann die Auffangfeder 34 auf einem Dämpfelement gelagert sein, welches innerhalb der Führungseinrichtung 20 angeordnet ist. Ein solcher Bewegungsdämpfer kann beispielsweise als Dämpfplatte 44 innerhalb der Führungseinrichtung 20 zur Lagerung der Auffangfeder 34 angeordnet sein. Die Dämpfplatte 44 kann als Teil der Federaufnahme 35 oder einstückig mit dieser ausgebildet sein. Insbesondere kann die Dämpfplatte 44 einen Hülsenabschnitt 45 der Federaufnahme 35 begrenzen.

Wie der Fig. 5 weiter entnommen werden kann, ist der Auffangkörper 16a mit einem Luftdurchlass 46 und die Führungseinrichtung 20 ebenfalls mit einem Luftdurchlass 48 ausgestattet. Schliesslich kann auch die Federaufnahme 35 beziehungsweise die Dämpfplatte 44 mit einem Luftdurchlass 50 versehen sein. Die Luftdurchlässe der einzelnen Komponenten können miteinander in Fluidkommunikation stehen. Dabei kann der Luftdurchlass 48 der Führungseinrichtung durch den Fänger 22 hindurchführen. Aufgrund der Anordnung der Luftdurchlässe kann eine Belüftung und/oder Entlüftung des Führungsinnenraums 32 bei Öffnungs- und/oder Schliessbewegungen des Schliesselements 14 sichergestellt werden.

Die Fig. 6 zeigt eine weitere Ausführungsform einer erfindungsgemässen Schliesseinrichtung 12. Die Schliesseinrichtung 12 gemäss Fig. 6 unterscheidet sich gegenüber der Ausführungsform von Fig. 5 lediglich durch die Ausgestaltung der Bremseinrichtung 16. Der Anschlagkörper 16a ist nicht durch eine gesonderte Auffangfeder relativ zur Führungseinrichtung 20 abgestützt, sondern weist selbst einen elastischen Abschnitt 16b auf. Der elastische Abschnitt 16b ist durch Ausnehmungen 16e gebildet und ermöglicht damit eine Komprimierung beziehungsweise eine federelastische Stauchung des Anschlagkörpers 16a.

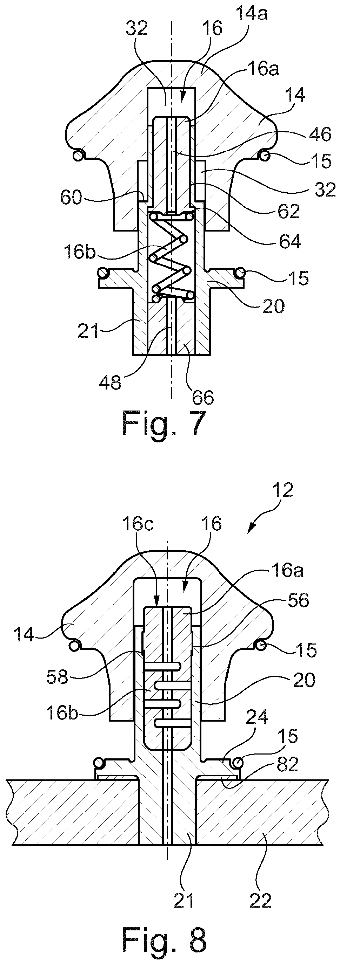

Die Fig. 7 zeigt eine Schliesseinrichtung 12 gemäss einer weiteren Ausführungsform der Erfindung. Die Ausführungsform gemäss Fig. 7 unterscheidet sich von den Ausführungsformen gemäss den Fig. 5 bis 6 insbesondere durch die Ausgestaltung der Führungseinrichtung 20 und auch in Bezug auf das formschlüssige Eingreifen zwischen der Führungseinrichtung 20 und dem Anschlagkörper 16a. So weist die Führungseinrichtung 20 eine umlaufende Stufe 60 und damit Abschnitte unterschiedlichen Aussendurchmessers beziehungsweise Aussenumfangs auf. Dementsprechend ist der Führungsinnenraum 32 ebenfalls mit Abschnitten unterschiedlichen Innendurchmessers beziehungsweise Innenumfangs ausgestattet. Dabei kann ein dem Schliesskopf 14a angrenzender Bereich des Führungsinnenraums 32 mit geringerem Innenumfang beziehungsweise Innendurchmesser ausgestattet sein, so dass der Schliesskopf 14a eine grössere Materialstärke und damit eine grössere Stabilität aufweist.

In der Ausführungsform gemäss Fig. 7 kann der Anschlagkörper 16a insbesondere in einem Führungsabschnitt 62 der Führungseinrichtung geführt sein. An dem Anschlagkörper 16a kann dabei ein Stützkragen 64 ausgebildet sein, der den Anschlagkörper 16a im Bereich der Stufe 60 an der Führungseinrichtung 20 abstützt, so dass eine Bewegung des Anschlagkörpers 16a in Richtung des Schliesselements 14 begrenzt ist. Innerhalb der Führungseinrichtung 20 ist ferner ein Abschlusselement 66 vorgesehen, durch den ein Innenraum der Führungseinrichtung auf einer dem Schliesselement 14 abgewandten Seite begrenzt ist. Der Luftdurchlass 48 der Führungseinrichtung 20 kann innerhalb des Abschlusselements 66 ausgebildet sein. Zwischen dem Abschlusselement 66 und dem Anschlagkörper 16a kann eine Auffangfeder 16b angeordnet sein, durch die der Anschlagkörper 16a federelastisch abgestützt ist. Auch bei dieser Ausgestaltung kann es sich bei der Auffangfeder 16b um eine Schraubenfeder oder dergleichen handeln.

Die Fig. 8 zeigt eine weitere Ausführungsform einer Schliesseinrichtung 12. Die Ausführungsform gemäss Fig. 8 unterscheidet sich von der Ausführungsform von Fig. 5 unter anderem durch die Art der formschlüssigen Abstützung des Anschlagkörpers 16a relativ zur Führungseinrichtung 20, sowie durch den unterschiedlichen elastischen Abschnitt 16b. Anstelle des Sprengrings 42 ist bei der Ausführungsform gemäss Fig. 8 an der Aussenumfangsfläche des Anschlagkörpers 16a ein Vorsprung 56 vorgesehen. Der Vorsprung 56 greift in eine nutartige Ausnehmung 58 der Führungseinrichtung 20 ein und ermöglicht, in vordefiniertem Umfang, eine Relativbewegung des Anschlagkörpers 16a innerhalb der Führungseinrichtung 20 beziehungsweise eine Stauchung und Entspannung in vordefiniertem Umfang. Der Vorsprung 56 kann insbesondere durch eine Durchmesservergrösserung relativ zu angrenzenden Abschnitten des Anschlagkörpers 16a realisiert werden. Weiterhin kann die Ausnehmung 58 den Vorsprung 56 derart hintergreifen, dass die Anschlagfläche 16c nur bis zu einem begrenzten Masse aus der Aufnahme der Führungseinrichtung 20 und damit in Richtung des Schliesselements 20 herausbewegbar ist.

Die Ausführungsform gemäss der Fig. 8 unterscheidet sich von der Ausführungsform gemäss Fig. 6 insbesondere auch durch die Art der Abstützung der Führungseinrichtung 20 gegenüber dem Fänger 22. Wie auch in der Ausführungsform gemäss Fig. 6 ist die Führungseinrichtung 20 mit einem kragenartigen Stützabschnitt 24 ausgestattet, der jedoch über eine Wellenfeder 82 an dem Fänger 22 abgestützt ist. Auf diese Weise kann eine federelastische Abstützung der Führungseinrichtung 20 an dem Fänger 22 sichergestellt und ein allmähliches Abbremsen des Schliesselements 14 bei Öffnungsbewegungen weiter begünstigt werden. Es kann zudem ein nicht dargestelltes Befestigungsmittel, beispielsweise ein Sprengring vorgesehen sein, welches verhindert, dass der Befestigungsabschnitt 21 aus dem Fänger 22 gleiten kann, beispielsweise indem der Sprengring in radialer Richtung über den Befestigungsabschnitt 21 vorstehet, und am Fänger 22 anliegt.

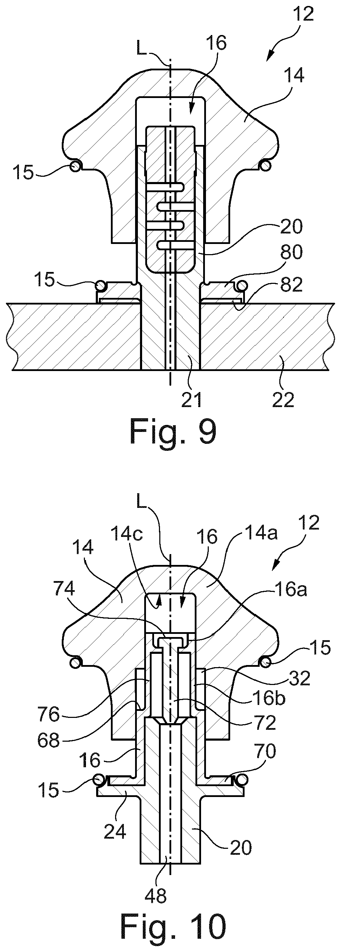

Die Fig. 9 zeigt eine Schliesseinrichtung 12 gemäss einer noch weiteren Ausführungsform der vorliegenden Erfindung. Die Ausführungsform gemäss Fig. 9 unterscheidet sich von der Ausführungsform gemäss Fig. 8 insbesondere durch die Ausgestaltung der Führungseinrichtung 20 beziehungsweise deren Abstützung am Fänger 22. So ist gemäss Fig. 9 die Führungseinrichtung über eine separate Dämpfplatte 80 an dem Fänger 22 abgestützt. Die Dämpfplatte 80 weist federelastische Eigenschaften auf und trägt somit ferner zur dämpfenden beziehungsweise allmählichen Abbremsung des Schliesselements 14 bei Öffnungsbewegungen bei. Zwischen der Dämpfplatte 80 und dem Fänger 22 kann ferner eine Wellenfeder 82 vorgesehen sein, durch die eine federelastische Abstützung der Führungseinrichtung 20 weiter verbessert werden kann.

Die Fig. 10 zeigt eine Schliesseinrichtung 12 gemäss einer noch weiteren Ausführungsform der vorliegenden Erfindung. Die Ausführungsform gemäss Fig. 10 unterscheidet sich von der Ausführungsform gemäss Fig. 7 durch die Ausgestaltung der Führungseinrichtung 20 sowie der Bremseinrichtung 16. In der Ausführungsform gemäss Fig. 10 handelt es sich bei der Bremseinrichtung 16 um ein hülsenförmiges Element, in dem die Führungseinrichtung 20 abschnittsweise aufgenommen ist. Die Bremseinrichtung 16 bildet somit einen Teil der Führungseinrichtung 20, da der Anschlagkörper 16a unmittelbar innerhalb des Führungsinnenraums 32 des Schliesselements 14 geführt ist. Ferner ist die Führungseinrichtung 20 innerhalb der Bremseinrichtung 16 geführt, so dass die Führungseinrichtung 20 mittelbar über die Bremseinrichtung 16 das Schliesselement 14 führt. Die Bremseinrichtung 16 umfasst einen elastischen Abschnitt 16b, ausgestaltet als dünnwandiger Hohlzylinder, beispielsweise in Form eines Wellbalgs, welcher federnde Eigenschaften aufweist. Die Bremseinrichtung 16 ist insbesondere aus einem Metall wie Bronze oder einem Kunststoff wie PEAK gefertigt. Die Führungseinrichtung 20 ist vorzugsweise aus Stahl gefertigt.

Wie der Fig. 10 weiter entnommen werden kann, ist die Bremseinrichtung 16 mit einer Stufe 68 ausgestattet, so dass die Bremseinrichtung 16 Abschnitte mit unterschiedlichen Aussendurchmessern beziehungsweise Aussenumfängen aufweist. Dementsprechend ist auch der Führungsinnenraum 32 mit unterschiedlichen Innendurchmessern beziehungsweise Innenumfängen versehen, wobei der dem Schliesskopf 14a angrenzende Bereich des Führungsinnenraums 32 mit einem kleineren Innendurchmesser beziehungsweise Innenumfang versehen ist als der Eintrittsbereich des Führungsinnenraums 32.

Wie der Fig. 10 weiter entnommen werden kann, ist an dem Anschlagkörper 16a ferner ein Kragenabschnitt 70 ausgebildet, der an dem Stützabschnitt 24 der Führungseinrichtung abgestützt ist. Zwischen dem Kragenabschnitt 70 und dem Stützabschnitt 24 kann ein Federelement beziehungsweise ein Dämpfelement angeordnet sein. Insbesondere kann zwischen dem Kragenabschnitt 70 und dem Stützabschnitt 24 eine Wellenfeder angeordnet sein, beispielsweise eine wie in Fig. 9 dargestellte Wellenfeder 82, durch die eine Relativbewegung zwischen dem Anschlagkörper 16a und der Führungseinrichtung 20 federelastisch abgestützt wird. Durch eine solche Wellenfeder kann beispielsweise ein Bewegungsspielraum von wenigen 10-tel mm, insbesondere von weniger als 1 mm, ermöglicht werden.

Gemäss Fig. 10 kann die Führungseinrichtung 20 ferner mit einem Halteabschnitt 72 ausgestattet sein. Der Halteabschnitt 72 kann nach Art eines Nagels ausgebildet sein und einen Kopfabschnitt 74 zum formschlüssigen Hintergreifen des Anschlagkörpers 16a aufweisen. Insbesondere kann der Kopfabschnitt 74 einen an einem Innenumfang des Anschlagkörpers 16a ausgebildeten Kragenabschnitt 76 formschlüssig hintergreifen und somit eine Bewegung des Anschlagkörpers 16a in Richtung einer Endfläche 14c des Schliesselements 14 begrenzen. Der Halteabschnitt 72 der Führungseinrichtung 20 kann mit einem Hülsenabschnitt 78 der Führungseinrichtung fest verbunden sein, wobei in einem Übergang zwischen der Halteeinrichtung 72 und dem Hülsenabschnitt 78 seitliche Öffnungen zur Fluidkommunikation mit dem Luftdurchlass 48 vorgesehen sein können.

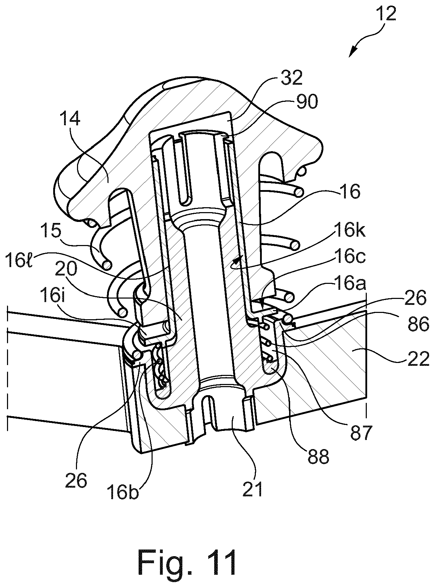

Die Fig. 11 zeigt eine perspektivische Schnittdarstellung einer Schliesseinrichtung 12 gemäss einer noch weiteren Ausführungsform. Die Ausführungsform gemäss Fig. 11 unterscheidet sich von den Ausführungsformen gemäss Fig. 1 bis 3 und 5 bis 10 durch die Ausgestaltung der Bremseinrichtung 16 sowie der Führungseinrichtung 20. Gemäss Fig. 11 weist die Bremseinrichtung 16 einen hülsenförmigen Abschnitt 161 sowie einen in radialer Richtung vorstehenden Anschlagkörper 16a auf. Der hülsenförmige Abschnitt 161 verläuft abschnittsweise innerhalb des Führungsinnenraums 32 des Schliesselements 14 und fasst, zumindest abschnittsweise, die Führungseinrichtung 20 ein. Der Anschlagkörper 16a ist als ein umlaufender Stützkragen 16i ausgestaltet, der ausserhalb des Führungsinnenraums 32 angeordnet ist. Der Stützkragen 16i ist über einen elastischen Abschnitt 16b, ausgestaltet als eine Auffangfeder 86, die ebenfalls ausserhalb des Führungsinnenraums 32 angeordnet ist, an der Führungseinrichtung 20 abgestützt. Bei der Auffangfeder 86 gemäss Fig. 11 kann es sich ebenfalls um eine Schraubenfeder oder dergleichen handeln. Die Auffangfeder 86 kann dabei innerhalb einer Aufnahme 87 der Führungseinrichtung 20 angeordnet sein. Die Aufnahme 87 kann ringförmig beziehungsweise umlaufend ausgebildet sein. Innerhalb der Aufnahme 87 kann ferner ein Dämpfelement 88 angeordnet sein, auf dem die Auffangfeder 86 abgestützt ist, so dass sich zusätzlich zu den Federeigenschaften auch Dämpfeigenschaften der Bremseinrichtung 16 ergeben.

Gemäss der Ausführungsform in Fig. 11 wird der hülsenförmige Abschnitt 161 über einen Kragenabschnitt 90 der Führungseinrichtung 20 formschlüssig hintergriffen, so dass eine Relativbewegung des hülsenförmigen Abschnitts 161 in Richtung des Schliesselements 14 - also in Fig. 11 einer Aufwärtsbewegung entsprechend - begrenzt ist.

Der Fig. 11 kann weiter entnommen werden, dass an der Führungseinrichtung 20 ein Lager 26 für die Schliessfeder 15 ausgebildet ist. Die Schliessfeder 15 wirkt somit zwischen dem Lager 26 der Führungseinrichtung sowie dem Schliesselement 14.

## Patentansprüche

1. Sitzventil (10), mit einem Ventilkörper (92) aufweisend eine Mehrzahl von Einlasskanälen (94), mit einer Mehrzahl von in einer Längsrichtung (L) beweglich angeordneten Schliesselementen (14), wobei jedem Einlasskanal (94) ein Schliesselement (14) zum Öffnen und Schliessen des Einlasskanals (94) zugeordnet ist, mit einer jedem Schliesselement (14) zugeordneten Schliessfeder (15), die das jeweilige Schliesselement (14) mit einer zum Schliessen des Einlasskanals (94) orientierten Vorspannkraft beaufschlagt, **dadurch gekennzeichnet, dass** jedem Schliesselement (14) eine Bremseinrichtung (16) zugeordnet ist, die getrennt von dem Schliesselement (14) angeordnet ist und die eine Öffnungsbewegung des jeweiligen Schliesselements (14) beim Öffnen des Einlasskanals (94) unabhängig von der Schliessfeder (15) allmählich abbremst.

2. Sitzventil (10) nach Anspruch 1, **dadurch gekennzeichnet, dass** das Schliesselement (14) in Längsrichtung (L), ausgehend von einer den Einlasskanal (94) schliessenden Stellung (S₁), in einer Öffnungsrichtung (L₀) entlang einer Mindeststrecke (L₁) relativ zur Bremseinrichtung (16) bewegbar ist, und dass die Bremseinrichtung (16) dazu eingerichtet ist, das Schliesselement (14) erst nach der zurückgelegten Mindeststrecke (L₁), ausgehend von der den Einlasskanal (94) schliessenden Stellung (S₁), allmählich abzubremsen.

3. Sitzventil (10) nach Anspruch 2, **dadurch gekennzeichnet, dass** das Schliesselement (14) durch eine Führungseinrichtung (20) entlang der Längsrichtung (L) beweglich geführt ist, und dass das Schliesselement (14) einen Führungsinnenraum (32) aufweist, in dem die Führungseinrichtung (20) zur Führung des Schliesselements (14) in Längsrichtung (L) verläuft, und dass die Führungseinrichtung (20) mit einem Fänger (22) verbunden ist.

4. Sitzventil (10) nach Anspruch 3, **dadurch gekennzeichnet, dass** das Schliesselement (14) einen Schliesskopf (14a14a) und einen Führungsabschnitt (14b) umfasst, wobei der Schliesskopf (14a) und der Führungsabschnitt (14b) entlang der Längsrichtung (L) nacheinander folgen, und wobei das Schliesselement (14), ausgehend vom Führungsabschnitt (14b), den sich in Längsrichtung (L) ins Innere des Schliesselements (14) in Richtung zum Schliesskopf (14a) hin erstreckenden Führungsinnenraum (32) aufweist.

5. Sitzventil (10) nach einem der Ansprüche 3 oder 4, **dadurch gekennzeichnet, dass** die Führungseinrichtung (20) einen hülsenförmigen Abschnitt (20b) aufweist, und dass die Bremseinrichtung (16) zumindest abschnittsweise innerhalb einer Ausnehmung (20a) des hülsenförmigen Abschnittes (20b) angeordnet ist.

6. Sitzventil (10) nach einem der Ansprüche 3 oder 4, **dadurch gekennzeichnet, dass** die Führungseinrichtung (20) einen hülsenförmigen Abschnitt (20b) aufweist, und dass die Führungseinrichtung (20) zumindest abschnittsweise innerhalb einer Ausnehmung (16a) der Bremseinrichtung (16) angeordnet.

7. Sitzventil (10) nach zumindest einem der vorstehenden Ansprüche, **dadurch gekennzeichnet, dass** die Bremseinrichtung (16) einen Anschlagkörper (16a) mit einer Anschlagfläche (16c) aufweist, an der das Schliesselement (14) nach einer Öffnungsbewegung beim Öffnen des Einlasskanals zur Anlage bringbar ist, wobei der Anschlagkörper (16a) in Öffnungsrichtung des Schliesselements (14) beweglich und/oder nachgiebig angeordnet ist.

8. Sitzventil (10) nach Anspruch 7, **dadurch gekennzeichnet, dass** der Anschlagkörper (16a) über eine Auffangfeder (34), insbesondere einer Schraubenfeder, relativ zur Führungseinrichtung (20) abgestützt ist.

9. Sitzventil (10) nach Anspruch 8, **dadurch gekennzeichnet, dass** der Anschlagkörper (16a) aus einem elastischen Material besteht oder einen elastischen Abschnitt (16b) zur elastischen Abstützung der Anschlagfläche (16c) aufweist, wobei der elastische Abschnitt (16b) bevorzugt durch wenigstens eine Materialausnehmung (16e) gebildet ist.

10. Sitzventil (10) nach zumindest einem der Ansprüche 7 bis 10, **dadurch gekennzeichnet, dass** der Anschlagkörper (16a) formschlüssig in der Führungseinrichtung (20) angeordnet ist.

11. Sitzventil (10) nach Anspruch 6, **dadurch gekennzeichnet, dass** die Bremseinrichtung (16) die Führungseinrichtung (20) zumindest abschnittsweise umschliesst, dass das Schliesselement (14) von der Bremseinrichtung (16) in Längsrichtung (L) geführt ist, und dass die Bremseinrichtung (16) relativ zur Führungseinrichtung (20) bewegbar ist.

12. Sitzventil (10) nach Anspruch 11, **dadurch gekennzeichnet, dass** der Anschlagkörper (16a) hülsenförmig und mit einem umlaufenden Stützkragen (16i) ausgebildet ist, wobei die Anschlagfläche (16c) am Stützkragen (16i) ausgebildet ist, und wobei der Anschlagkörper (16a) über den Stützkragen (16i) an einer Auffangfeder (34) abgestützt ist.

13. Sitzventil (10) nach Anspruch 12, **dadurch gekennzeichnet, dass** die Auffangfeder (34) der Bremseinrichtung (16) in einer Aufnahme (86) der Führungseinrichtung (20) angeordnet ist, insbesondere in einer ringförmig umlaufenden Aufnahme (86).

14. Sitzventil (10) nach einem der Ansprüche 8 bis 10, **dadurch gekennzeichnet, dass** die Auffangfeder (34) wenigstens abschnittsweise innerhalb des Führungsinnenraums (32) des Schliesselements (14) angeordnet ist.

15. Sitzventil (10) nach zumindest einem der vorstehenden Ansprüche, **dadurch gekennzeichnet, dass** die Führungseinrichtung (20) und die Bremseinrichtung (16), insbesondere der Anschlagkörper (16a), einen Luftdurchlass (46, 48, 50) aufweist, und dass der Luftdurchlass (46) der Bremseinrichtung (16) mit einem Luftdurchlass (48) der Führungseinrichtung (20) in Fluidkommunikation steht, und dass ein Luftdurchlass (50) durch den Fänger (22) hindurchführt.

16. Schliesseinrichtung (12), vorzugsweise für ein Sitzventil (10) nach einem der vorstehenden Ansprüche, mit einem zum Öffnen und Schliessen eines Einlasskanals (94) beweglich angeordneten Schliesselement (14), mit einer Schliessfeder (15), die das Schliesselement (14) mit einer zum Schliessen des Einlasskanals (94) orientierten Vorspannkraft beaufschlagt, und mit einer Bremseinrichtung (16), die getrennt von dem Schliesselement (14) angeordnet ist und die eine Öffnungsbewegung des Schliesselements (14) beim Öffnen des Einlasskanals unabhängig von der Schliessfeder (15) allmählich abbremst.

17. Kolbenkompressor umfassend ein Sitzventil oder eine Schliesseinrichtung nach einem der vorstehenden Ansprüche.
